# EUROPÄISCHE PATENTANMELDUNG

(11) **EP 0 758 582 A2**
(43) Veröffentlichungstag der Anmeldung: **19.02.1997**
(21) Anmeldenummer: 96112192.8
(22) Anmeldetag: 27.07.1996
(51) Int. Cl.: B32B 17/10, C03C 27/12

(54) **Verbundglasscheibe mit einer Verbundschicht und einer Kantenversiegelungsschicht sowie Verwendung besonderer Kunststoffe für die Herstellung solcher Verbundglasscheiben**

(30) Priorität: 10.08.1995 DE 19529449
(71) Anmelder: FLACHGLAS Automotive GmbH, 58455 Witten (DE)
(72) Erfinder: Marquardt, Reinhold, Dr., 45884 Gelsenkirchen (DE); Costa, Peter, Dr., 58455 Witten (DE)
(74) Vertreter: Andrejewski, Walter, Dr.

(57) **Zusammenfassung**

Verbundglasscheibe mit einer Außenglasscheibe, einer Innenglasscheibe und einer einlagigen oder mehrlagigen Verbundschicht, welche Verbundglasscheibe eine einfache und/oder eine komplexe Begrenzungskante und in dieser die Glasscheibenkanten der beiden Glasscheiben aufweist. Die Begrenzungskante ist mit einer Strukturschicht aus einem Versiegelungskunststoff versiegelt. Die Strukturschicht besitzt eine Emulsionsbruch-Oberfläche, die dadurch entstanden ist, daß der Versiegelungskunststoff als fließfähige Emulsion aufgebracht und danach auf der Begrenzungskante unter Ausbildung von Oberflächenspannungsausformungen getrocknet ist. Die Strukturschicht läuft ihrerseits auf den Kanten der Glasscheiben stufenfrei mit dünnem Fahnenbereich aus.

## Beschreibung

Die Erfindung betrifft eine Verbundglasscheibe mit einer Außenglasscheibe, einer Innenglasscheibe und einer einlagigen oder mehrlagigen Verbundschicht, gegebenenfalls mit einer integrierten, optisch wirksamen Beschichtung, welche Verbundglasscheibe eine einfache und/oder eine komplexe Begrenzungskante und in dieser die Glasscheibenkanten der beiden Glasscheiben aufweist. Die Erfindung betrifft außerdem die Verwendung spezieller Kunststoffe zur Herstellung der Verbundglasscheibe. - Der Begriff Kante bezeichnet in Strenge die Schnittlinie zweier Ebenen. Kante bezeichnet im Rahmen der Erfindung die im wesentlichen ebene, gebrochene oder geschliffene, zur Ebene der Glasscheiben orthogonale Fläche am Rande einer Glasscheibe, auch mit im Querschnitt verrundeten oder gebrochenen Ecken. Begrenzungskante bezeichnet im Sinne der vorstehenden Definition die entsprechende Fläche am Rande einer Verbundglasscheibe. Als einfache Begrenzungskante verläuft sie im wesentlichen eben, als komplexe Begrenzungskante kann sie mit einer Nut versehen und/oder gestuft sein. Die optisch wirksame Beschichtung kann zum Beispiel eine metallische oder eine metalloxidische Schicht sein. Sie kann sich auf einer der beiden Glasscheiben, auf der Verbundschicht oder auf einer besonderen Folie befinden. - Kunststoffe für die Herstellung der Verbundschicht sind umfangreich bekannt. Zumeist wird Polyvinylbutyral eingesetzt, aber auch Ethylenvinylacetate und Polyurethane können als Verbundschicht verwendet werden.

Verbundglasscheiben des beschriebenen Aufbaus werden für die verschiedensten Zwecke eingesetzt, hauptsächlich in der Bauindustrie und in der Kraftfahrzeug-Industrie. Der Einsatz verlangt lange, häufig nach Jahrzehnten zählende Standzeiten. Andererseits haben die Verbundglasscheiben erhebliche Beanspruchungen aufzunehmen, die die Standzeit reduzieren. Die Beanspruchungen sind statische oder dynamische mechanische Beanspruchungen und, oft überlagert, erhebliche thermische Beanspruchungen, zum Beispiel aus Sonneneinstrahlung. Es muß sichergestellt werden, daß Korrosionserscheinungen, Delaminationen, d. h. Auflösung des Verbundes, und in Verbindung damit Auffeuchten der Verbundschicht und Randeintrübung der Verbundglasscheibe vermieden werden. Der Begriff Korrosion versteht sich in diesem Zusammenhang sehr allgemein und umfaßt insbesondere unter Feuchtigkeitseinwirkung auftretende Zerstörungen der funktionalen Beschichtung, die sich auch als Agglomeration der IR-reflektierenden Silberschichten erweisen können. Um trotz dieser Beanspruchungen lange Standzeiten zu gewährleisten, ist es üblich, die Begrenzungskante vollständig oder bereichsweise zu versiegeln. Bei einer bekannten Ausführungsform, die Kraftfahrzeugscheiben betrifft (EP 0 391 165 A2, 1990), besteht die Randversiegelung aus einem Kunststoff der Gruppe Fluoropolymer, Polybutenpolymer, Butylpolymer. Sie ist auf den umlaufenden, im übrigen ebenen Rand der Verbundglasscheibe aufgebracht. Die Standzeit dieser bekannten Verbundglasscheibe ist verbesserungsfähig. Seit langem ist es bekannt (GB -PS 310 065, 1925), bei Verbundscheiben beliebiger Zweckbestimmung im Bereich der Verbundschicht in der Kante der Verbundglasscheibe eine umlaufende Nut vorzusehen, die sich, von der Verbundschicht ausgehend, zum Rand hin keilförmig erweitert. In dieser Nut befindet sich der Kunststoff der Versiegelung, der jedoch nicht spezifiziert ist. Die insoweit bekannten Maßnahmen haben bei Verbundglasscheiben des eingangs beschriebenen Aufbaus zu einer Verbesserung der Standzeit nicht beigetragen. In der Praxis wird der Kunststoff für die Randversiegelung zumeist in pastösem Zustand als Strang aufgebracht und zum Beispiel mit einem spachtelartigen Werkzeug glattgezogen. Das ist im Rahmen einer industriellen Serienfertigung arbeitsaufwendig und trägt nichtsdestoweniger zur Erhöhung der Standzeit nicht ausreichend bei. Die so hergestellte Versiegelungsschicht ist keine Strukturschicht, die insgesamt, also auch bezüglich ihrer Oberfläche, der Struktur der Begrenzungskante folgt und sich im übrigen ihre Oberflächenstruktur selbst bildet, sondern eine Spachtelschicht mit Spachteloberfläche, das heißt werkzeuggeformt. Auch die insoweit bekannten Maßnahmen sind bezüglich der Standzeit verbesserungsbedürftig.

Der Erfindung liegt das technische Problem zugrunde, bei einer Verbundglasscheibe des eingangs beschriebenen Aufbaus und der angegebenen Zweckbestimmung die Standzeit auch bei Einsatz unter extremen Beanspruchungen, zu verbessern und gleichzeitig die Fertigung, die Rahmen einer industriellen Serienfertigung erfolgt, zu vereinfachen.

Zur Lösung dieses technischen Problems ist Gegenstand der Erfindung eine Verbundglasscheibe mit einer Außenglasscheibe, einer Innenglasscheibe und einer einlagigen oder mehrlagigen Verbundschicht, gegebenenfalls mit einer integrierten optisch wirksamen Beschichtung, welche Verbundglasscheibe eine einfache und/oder eine komplexe Begrenzungskante und in dieser die Glasscheibenkanten der beiden Glasscheiben aufweist, mit den Merkmalen:
1.1) die Begrenzungskante ist mit einer Strukturschicht aus einem Versiegelungskunststoff versiegelt, die der Makrogeometrie der Begrenzungskante folgt,
1.2) die Strukturschicht besitzt eine Emulsionsbruch-Oberfläche, die dadurch entstanden ist, daß der Versiegelungskunststoff als fließfähige Emulsion aufgebracht und danach auf der Begrenzungskante unter Ausbildung von Oberflächenspannungsausformungen getrocknet ist,
wobei die Strukturschicht ihrerseits auf den Kanten der Glasscheiben stufenfrei mit dünnem Fahnenbereich ausläuft.

Strukturschicht bezeichnet im Rahmen der Erfindung eine Schicht, die nicht werkzeuggeformt ist, sondern die sich ihre Struktur selbst gegeben hat. Sie schließt an die Oberfläche oder die Oberflächen der Begrenzungskante mit hoher Adhäsion an und bildet mit ihrer eigenen Oberfläche die Oberfläche der Begrenzungskante weitgehend ab. Sie bildet aber außerdem Strukturelemente aus, die aus der Tatsache resultieren, daß der Versiegelungskunststoff als Emulsion, d. h. flüssig, aufgebracht wird, wobei die Oberflächenspannung der Emulsion im Bereich von Singularitäten in der Begrenzungskante Strukturelemente, zum Beispiel Verrundungen, ausbildet. Solche Singularitäten sind insbesondere, querschnittsmäßig betrachtet, Ecken, Winkel, Kehlen und dergleichen Geometrien. Außerdem gehört zur Strukturschicht, daß sie wie angegeben, mit dünnem Fahnenbereich ausläuft.

Die Erfindung geht von der Erkenntnis aus, daß eine Versiegelungsschicht, die in der beschriebenen Weise als Strukturschicht ausgebildet ist, überraschenderweise in den für die Standzeit kritischen Bereichen (in Ecken, Winkeln, Kehlen oder dergleichen) oberflächenspannungsbestimmte Strukturelemente ausbildet, welche die Standzeit erhöhen, und zwar auch unter extremen statischen und dynamischen mechanischen Beanspruchungen und extremen thermischen Beanspruchungen. Störende Korrosionsphänomene, Delamination und Auffeuchtung mit Trübwerden werden wirksam verhindert. In kritischen Bereichen stoßen bei einer Verbundglasscheibe des beschriebenen Aufbaus auch unterschiedliche Werkstoffe, zum Beispiel Glas und der Kunststoff der Verbundschicht, aneinander und hier Verschließen die sich ausbildenden Strukturelemente des Versiegelungskunststoffes jeden Spalt oder Mikrospalt. Von besonderem fertigungstechnischen Vorteil ist, daß die Emulsion einfach und problemlos, wie eine Farbe, aufgebracht werden kann.

Die Praxis unterscheidet zwischen Emulsionen, Suspensionen und Dispersionen. Bei Emulsionen befinden sich in der geschlossenen Phase oder dem Dispersionsmittel extrem feine, kolloidale Flüssigkeitsteile, d. h. Tröpfchen, welche die disperse Phase bilden. Der Tröpfchendurchmesser liegt im Bereich von 1 bis 50 µm. Bei einer Suspension liegt eine disperse Verteilung extrem kleiner, jedoch nichtmolekularer Teilchen eines festen Körpers in einer Flüssigkeit vor, - und Suspensionen erscheinen daher im durchfallenden Licht häufig als trüb. Der Begriff Dispersion bildet gleichsam einen technologischen Oberbegriff und bezeichnet ein aus zwei oder mehr als zwei Phasen bestehendes Stoffsystem, bei dem ein Stoff, die disperse Phase, in einem anderen Stoff, dem Dispersionsmittel, in feinster Form verteilt. Bei einer Dispersion können alle Phasen fest, flüssig oder auch gasförmig sein. Die Erfindung verwendet den Begriff Emulsion, was nicht ausschließt, daß die disperse Phase auch feste Bestandteile aufweist. Die Emulsion, mit der die Erfindung arbeitet, bricht beim Kontakt mit der Begrenzungskante, das Dispersionsmittel verdunstet und die Emulsionsbruch-Oberfläche der Strukturschicht bildet sich wie beschrieben aus. Zu den Verdickungen kommt es, weil infolge der Oberflächenspannung die Emulsion sich im Bereich der Singularitäten angesammelt hat. Der dünne Fahnenbereich schmiegt sich in die Mikrostruktur der Begrenzungskante und der Glasscheibenkanten gleichsam ein und bewirkt eine sichere Abdichtung, so daß Sauerstoff oder Wasserdampf auch nicht zwischen der Strukturschicht und den Glasscheiben bis in den Bereich der Verbundschicht eindringen kann. Die Strukturschicht, die aus der brechenden Emulsion entsteht, ist ungewöhnlich gasdicht.

Im einzelnen bestehen im Rahmen der Erfindung mehrere Möglichkeiten der weiteren Ausbildung und Gestaltung der erfindungsgemäßen Verbundglasscheiben. So sind vorzugsweise die Glasscheibenkanten der beiden Glasscheiben geschliffen und liegt die Strukturschicht zumindest mit ihrem dünnen Fahnenbereich auf diesen geschliffenen Kanten auf.

Bei einer erfindungsgemäßen Verbundglasscheibe kann die Begrenzungskante sehr unterschiedlich ausgebildet sein. So hat sich die Erfindung bei Verbundglasscheiben bewährt, bei denen die Begrenzungskante als ebene Kante ausgeführt ist sowie Glasscheibenkanten mit, im Profil betrachtet, gebrochenen oder verrundeten Ecken besitzt, und bei denen die Strukturschicht eine im Querschnitt konvex gerundete, durch die Oberflächenspannung der Emulsion definierte Oberfläche aufweist. Die Rundung kann mehr oder weniger ausgeprägt sein. Man kann auch sagen, daß sich eine dem Kantenprofil folgende, sehr einheitliche Schichtdicke ausbildet, wobei die Oberflächenspannung und die Viskosität über die Dicke der Strukturschicht entscheidet.

Bewährt hat sich auch eine andere Ausführungsform, bei der die Begrenzungskante eine längslaufende Nut aufweist, die durch einen fehlenden Randbereich der Verbundschicht mit ebenem, konkavem, konvexem oder firstförmigem Nutengrund gebildet ist und bei denen die Strukturschicht, im Querschnitt betrachtet, im Bereich der Nutenecken verrundete Verdickungen aufweist, die durch die Oberflächenspannung der Emulsion definiert sind. Bei dieser Ausführungsform trägt zur Optimierung bei, daß die Kontaktfläche zwischen der Strukturschicht und den Glasscheiben bzw. den Glasscheibenkanten besonders groß ist.

Bewährt hat sich auch eine Ausführungsform, bei der die Begrenzungskante an einer der Glasscheiben einen Glasscheibenüberstand aufweist, und bei der die Strukturschicht im Übergang zu diesem Glasscheibenüberstand ebenfalls verrundete Verdickungen aufweist, die durch die Oberflächenspannung der Emulsion gebildet sind.

Im Rahmen der Erfindung liegt außerdem eine besondere Ausführungsform für extreme Beanspruchungen, bei der in der Begrenzungskante die Innenglasscheibe und die Außenglasscheibe, zur Verbundschicht hin, eine durch Schleifen gebildete Verrundung aufweisen, sowie eine im Querschnitt trompetenförmige Nut bilden, die sich von der Verbundschicht zum Rand hin erweitert, und bei der in der Nut die Strukturschicht strangförmig verdickt ist, und zwar durch mehrfaches Auftragen und nicht werkzeuggeformt.

Im Rahmen der Erfindung kann mit den verschiedensten phänomenologisch unterschiedlichen Versiegelungskunststoffen gearbeitet werden. Insbesondere zum Einsatz im Rahmen der Kraftfahrzeug-Industrie empfiehlt es sich, so auszuwählen, daß die Strukturschicht aus einem transparenten Versiegelungskunststoff besteht. Sie kann zu dieser Verwendung auch aus einem transluzenten Versiegelungskunststoff bestehen.

Wie bereits erwähnt, eignen sich im Rahmen der Erfindung auch in werkstoffmäßiger Hinsicht die verschiedensten Versiegelungskunststoffe für den Aufbau der Strukturschicht. Eine bevorzugte Ausführungsform, der besondere Bedeutung zukommt und die sich besonders bewährt hat, ist dadurch gekennzeichnet, daß die Strukturschicht aus einem Ethylenpolymerisat besteht. Diese Strukturschicht kann insbesondere aus einem Polyethylenwachs, vorzugsweise aus einem Polyethylen-Copolymerisat-Wachs, aufgebaut sein. Der Ausdruck Wachs wird in der modernen Praxis für eine Reihe künstlich gewonnener Stoffe verwendet, die in der Regel die folgenden besonderen Eigenschaften aufweisen, nämlich: Bei Temperaturen bis z. B. 40° C oder höher ausreichend fest, grob- bis feinkristallin oder amorph, durchscheinend bis opak, jedoch nicht glasartig, bei einer Temperatur von über 40° C oder höher ohne Zersetzung schmelzend, nicht fadenziehend. Solche Wachse unterscheiden sich von ähnlichen synthetischen Produkten hauptsächlich darin, daß sie in der Regel etwa zwischen 50° und 90° C, in Ausnahmefällen auch bis zu etwa 200° C, in einen schmelzflüssigen, niedrigviskosen Zustand übergehen und praktisch frei von aschebildenden Verbindungen sind. In diesem Sinne spricht die Erfindung von Polyethylenwachsen. Es kann sich insbesondere um Polyethylen-Copolymer-Wachse handeln. Bewährt hat sich ein solches Wachs mit einem Copolymer aus Ethylen und einer aus organischen Säuregruppen enthaltenden Co-Komponente, wobei die Säuregruppen enthaltende Komponente entweder copolymerisierend oder nachträglich durch Propfung oder eine chemische Umsetzung erhalten wird. Solche Polyethylen-Wachse und -Dispersionen bringt die BASF Aktiengesellschaft unter den Bezeichnungen Luwax, Sicolub und Poligen auf den Markt.

Gegenstand der Erfindung ist auch die Verwendung eines Ethylenpolymerisats in Form einer "Ethylenpolymerisat in Wasser"-Emulsion für die Herstellung der Strukturschicht der vorstehend beschriebenen Verbundglasscheibe mit der Maßgabe, daß die Emulsion so aufgebracht wird, daß Strukturschichten gebildet werden, die eine Dicke im Bereich von 5 bis 8 µm aufweisen. Es empfiehlt sich im Rahmen dieser Verwendung die weitere Maßgabe, daß die Emulsion auf Glasscheibenkanten aufgebracht wird, die eine Schleifbehandlung mit einem Diamantwerkzeug erfahren haben, welches eine mittlere Schleifkorngröße von 76 bis 91 µm aufweist. Überraschenderweise bricht an geschliffenen Kanten die Emulsion besonders freudig, und zwar mit intensiver Verankerung der Elemente der Strukturschicht in dem durch Schleifen entstandenen Rauhigkeitsgebirge. Es empfiehlt sich in diesem Zusammenhang die weitere Maßgabe, daß die Emulsion auf Glasscheibenflächen und/oder Glasscheibenkanten aufgebracht wird, die mit reaktiven organischen Verbindungen des Aluminiums, des Siliciums, des Vanadiums, des Titans oder des Zirkons oder Gemischen dieser Verbindungen vorbehandelt sind. Zweckmäßigerweise wird dabei mit reaktiven organischen Amino-Verbindungen gearbeitet. Im Rahmen der beschriebenen Verwendung wird optimierend vorzugsweise mit einem Ethylenpolymerisat der folgenden Zusammensetzung gearbeitet:
- 30 bis 90 Gewichtsteile: Ethylen,
- 0 bis 10 Gewichtsteile: weiterer α -Olefine mit 2 bis 12 C-Atomen, welche auch Halogenatome tragen können,
- 3 bis 40 Gewichtsteile: eines oder mehrerer Acryl- oder Methacrylsäureestern, bei denen der Esterrest aus C₁- bis C₂₀-Alkyl, C₅- bis C₁₈-Cycloalkyl oder C₇- bis C₁₈-Aralkyl besteht, wobei die genannten Esterreste auch Halogenatome tragen können,
- 7 bis 30 Gewichtsteile: Acrylsäure und/oder Methacrylsäure und
- 0 bis 10 Gewichtsteile: weiterer copolymerisierbarer Monomere,
wobei mit diesem Ethylenpolymerisat eine "Ethylenpolymerisat in Wasser"-Emulsion gebildet wird. Eine Spezifizierung dieses Ethylenpolymerisates weist die folgende Zusammensetzung auf:
- 50 bis 75 Gewichtsteile: Ethylen,
- 0 bis 8 Gewichtsteile: weiterer α -Olefine mit 2 bis 12 C-Atomen, welche auch Halogenatome tragen können,
- 10 bis 25 Gewichtsteile: eines oder mehrerer Acryl- oder Methacrylsäureestern, bei denen der Esterrest aus C₆- bis C₁₈-Alkyl, C₆- bis C₁₂-Cycloalkyl oder C₇- bis C₁₄-Aralkyl besteht, wobei die genannten Esterreste auch Halogenatome tragen können,
- 15 bis 25 Gewichtsteile: Acrylsäure und/oder Methacrylsäure
- 0 bis 5 Gewichtsteile: weiterer copolymerisierbarer Monomere.

Im Rahmen der Erfindung liegt es, die Ethylenpolymerisate auch als Verbundschicht einzusetzen.

Im folgenden wird die Erfindung anhand einer lediglich ein Ausführungsbeispiel darstellenden Zeichnung ausführlicher erläutert.

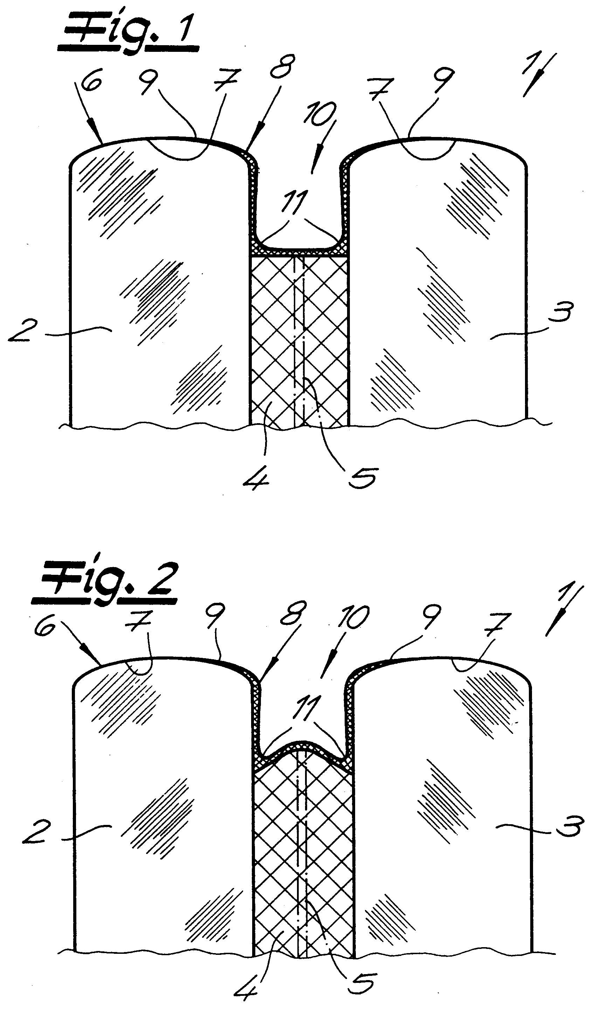

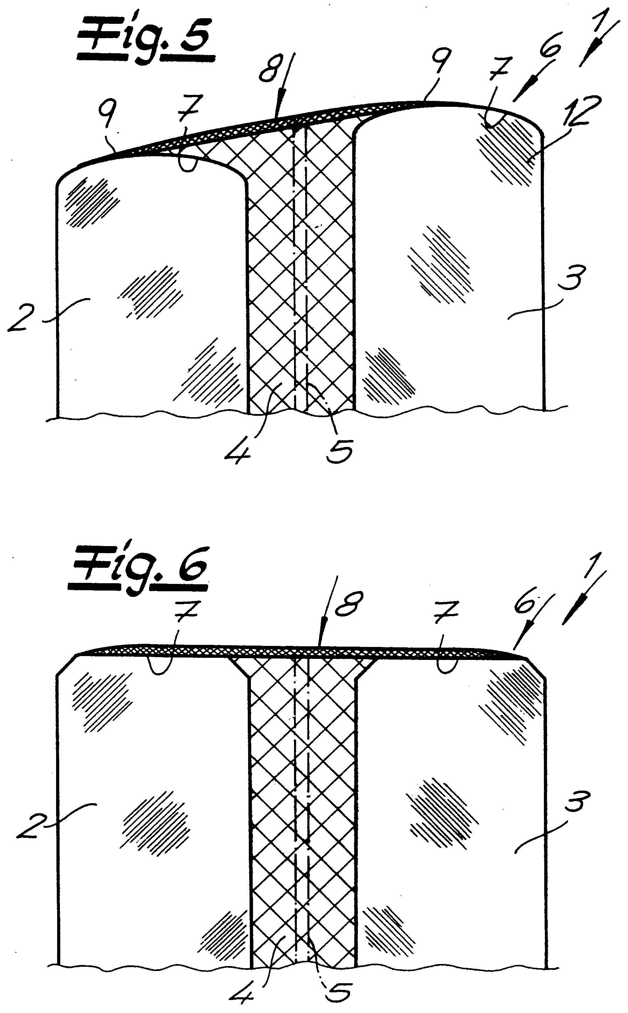

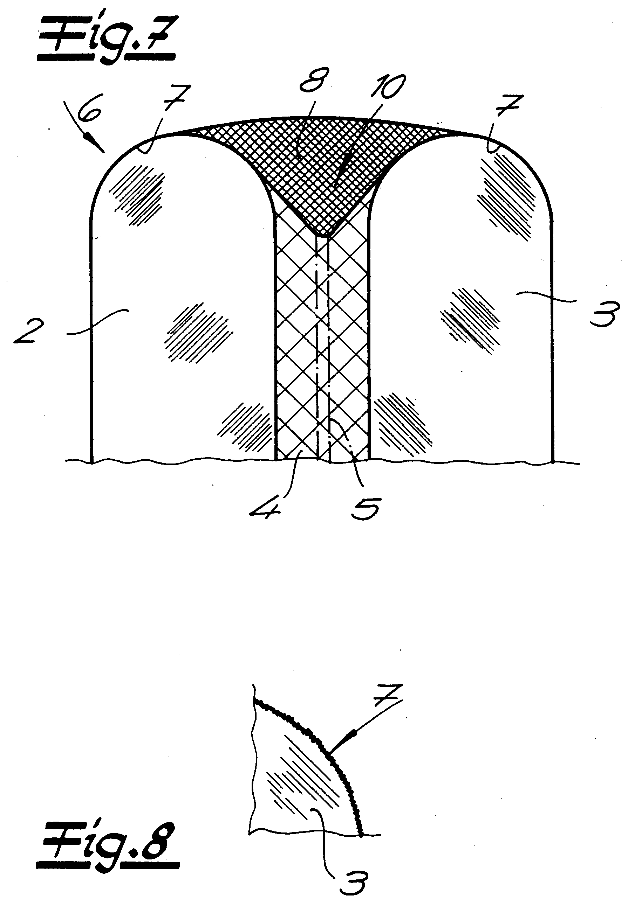

Die Fig. 1 bis 7 zeigen unterschiedliche Ausführungsformen einer erfindungsgemäßen Verbundglasscheibe im Schnitt und ausschnittsweise, bei gegenüber der Natur wesentlich vergrößertem Maßstab. Fig. 8 zeigt den Ausschnitt A aus dem Gegenstand der Fig. 7.

Die in den Fig. dargestellten Verbundglasscheiben 1 besitzen eine Außenglasscheibe 2, eine Innenglasscheibe 3 und eine einlagige oder mehrlagige Verbundschicht 4. Die Verbundschicht ist in allen Figuren übertrieben dick gezeichnet. Sie können mit einer integrierten optischen Beschichtung 5 versehen sein, wie es in den Figuren strichpunktiert angedeutet ist. Die Verbundglasscheiben 1 besitzen eine einfache oder eine komplexe Begrenzungskante 6 und in dieser die Glasscheibenkanten 7 der beiden Glasscheiben 2, 3. Bei allen Ausführungsformen ist die Begrenzungskante 6 mit einer Strukturschicht 8 aus einem Versiegelungskunststoff versehen, welche Strukturschicht 8 der Makrogeometrie der Begrenzungkante 6, und zwar auch in bezug auf ihre Außenoberfläche, folgt. Die Strukturschicht 8 besitzt eine Emulsionsbruch-Oberfläche. Eine solche entsteht, wenn einen Emulsion bricht und das Dispersionsmittel verdunstet. Die Emulsionsbruch-Oberfläche der Strukturschicht ist im Ausführungsbeispiel dadurch entstanden, daß der Versiegelungskunststoff als fließfähige Emulsion aufbracht und danach auf der Begrenzungskante 6 unter Ausbildung von Oberflächenspannungsausformungen getrocknet ist. Wie solche Oberflächenspannungsausformungen sich ausbilden, wurde bereits beschrieben. Die Strukturschicht 8 ihrerseits läuft auf den Glasscheibenkanten 7 stufenfrei mit einem dünnen Fahnenbereich 9 aus. Im Ausführungsbeispiel und nach bevorzugter Ausführungsform der Erfindung mögen die Glasscheibenkanten 7 der beiden Glasscheiben 2, 3 geschliffen sein. Die Strukturschicht 8 läuft zumindest mit ihrem dünnen Fahnenbereich 9 auf diesen geschliffenen Glasscheibenkanten 7 aus. In bezug auf die Oberfläche der geschliffenen Glasscheibenkanten 7 wird auf die Fig. 8 verwiesen.

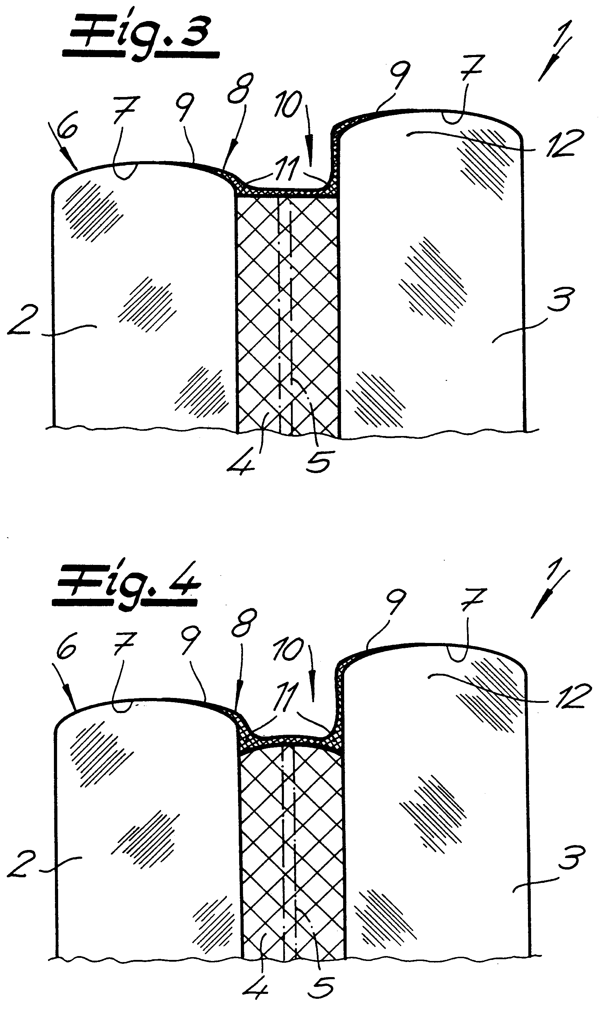

Bei der Ausführungsform nach den Fig. 6 ist die Begrenzungskante 6 als ebene Kante ausgeführt. Sie besitzt Glasscheibenkanten 7 mit, im Profil betrachtet, gebrochenen oder verrundeten Ecken. Die Strukturschicht 8 weist eine im Querschnitt konvex gerundete, durch die Oberflächenspannung der Emulsion definierte Oberfläche auf. Bei der Ausführungsform nach den Fig. 1, 2, 4 und 7 weist die Begrenzungskante 6 eine längslaufende Nut 10 auf, die durch einen fehlenden Randbereich der Verbundschicht 4 mit ebenem, konkavem, konvexem oder firstförmigem Nutengrund gebildet ist. Die Strukturschicht 8 weist, im Querschnitt betrachtet, im Bereich der Nutenecken verrundete Verdickungen 11 auf, die durch die Oberflächenspannung der Emulsion gebildet und definiert sind. Ihre Dicke läßt sich durch die Menge der Emulsion einstellen, die aufgebracht worden ist. Bei der Ausführungsform nach den Fig. 3, 4 und 5 besitzen die Begrenzungskanten an einer der Glasscheiben 2 bzw. 3 einen Glasscheibenüberstand 12. Die Anordnung ist bei den Figuren 2, 3 so getroffen, daß die Strukturschicht 8 verrundete Verdickungen 11 aufweist, die sich durch die Oberflächenspannung der Emulsion gebildet haben.

Eine besondere Ausführungsform ist in der Fig. 7 dargestellt. Man erkennt, daß in der Begrenzungskante 6 die Außenglasscheibe 2 und die Innenglasscheibe 3 zur Verbundschicht 4 hin, eine durch Schleifen gebildete Verrundung aufweisen, sowie eine im Querschnitt trompetenförmige Nut 10 bilden, die sich von der Verbundschicht 4 zum Rand hin erweitert, wobei in der Nut 10 die Strukturschicht 8 strangförmig verdickt ist, und zwar durch mehrfaches Aufbringen.

Wie bereits erwähnt, besteht die Strukturschicht 8 vorzugsweise aus einem transparenten Versiegelungskunststoff. Sie kann aber auch transluzent ausgebildet sein. Die bevorzugten Werkstoffe sind in den Patentansprüchen 9 und 10 aufgeführt. Außerdem sind die Maßgaben von Bedeutung, die in den Verwendungsansprüchen 11 bis 15 behandelt sind.

Das Wasser der Emulsion kann ein Netzmittel aufweisen.

## Patentansprüche

1. Verbundglasscheibe mit einer Außenglasscheibe, einer Innenglasscheibe und einer einlagigen oder mehrlagigen Verbundschicht, gegebenenfalls mit einer integrierten optisch wirksamen Beschichtung, welche Verbundglasscheibe eine einfache und/oder eine komplexe Begrenzungskante und in dieser die Glasscheibenkanten der beiden Glasscheiben aufweist, mit den Merkmalen:
1.1) die Begrenzungskante ist mit einer Strukturschicht aus einem Versiegelungskunststoff versiegelt, die der Makrogeometrie der Begrenzungskante folgt,
1.2) die Strukturschicht besitzt eine Emulsionsbruch-Oberfläche, die dadurch entstanden ist, daß der Versiegelungskunststoff als fließfähige Emulsion aufgebracht und danach auf der Begrenzungskante unter Ausbildung von Oberflächenspannungsausformungen getrocknet ist,
wobei die Strukturschicht ihrerseits auf den Kanten der Glasscheiben stufenfrei mit dünnem Fahnenbereich ausläuft.

2. Verbundglasscheibe nach Anspruch 1, wobei die Glasscheibenkanten der beiden Glasscheiben geschliffen sind und die Strukturschicht zumindest mit dem dünnen Fahnenbereich auf diesen geschliffenen Kanten ausläuft.

3. Verbundglasscheibe nach einem der Ansprüche 1 oder 2, wobei die Begrenzungskante als ebene Kante ausgeführt ist sowie Glasscheibenkanten mit, im Profil betrachtet, gebrochenen oder verrundeten Ecken besitzt, und wobei die Strukturschicht eine im Querschnitt konvex gerundete, durch die Oberflächenspannung der Emulsion definierte Oberfläche aufweist.

4. Verbundglasscheibe nach einem der Ansprüche 1 oder 2, wobei die Begrenzungskante eine längslaufende Nut aufweist, die durch einen fehlenden Randbereich der Verbundschicht mit ebenem, konkavem, konvexem oder firstförmigem Nutengrund gebildet ist, und wobei die Strukturschicht, im Querschnitt betrachtet, im Bereich der Nutenecken verrundete Verdickungen aufweist, die durch die Oberflächenspannung der Emulsion definiert sind.

5. Verbundglasscheibe nach einem der Ansprüche 1, 2 oder 3, wobei die Begrenzungskante an einer der Glasscheiben einen Glasscheibenüberstand aufweist und wobei die Strukturschicht im Übergang zu diesem Glasscheibenüberstand ebenfalls verrundete Verdickungen aufweist, die durch die Oberflächenspannung der Emulsion gebildet sind.

6. Verbundglasscheibe nach Anspruch 2, wobei in der Begrenzungskante die Innenglasscheibe und die Außenglasscheibe, zur Verbundschicht hin, eine durch Schleifen gebildete Verrundung aufweisen sowie eine im Querschnitt trompetenförmige Nut bilden, die sich von der Verbundschicht zum Rand hin erweitert, und wobei in der Nut die Strukturschicht strangförmig verdichtet ist.

7. Verbundglasscheibe nach einem der Ansprüche 1 bis 6, wobei die Strukturschicht aus einem transparenten Versiegelungskunststoff besteht.

8. Verbundglasscheibe nach einem der Ansprüche 1 bis 6, wobei die Strukturschicht aus einem transluzenten Versiegelungskunststoff besteht.

9. Verbundglasscheibe nach einem der Ansprüche 1 bis 8, wobei die Strukturschicht aus einem Ethylenpolymerisat besteht.

10. Verbundglasscheibe nach Anspruch 9, wobei die Strukturschicht aus einem Polyethylenwachs, vorzugsweise aus einem Polyethylen-Copolymerisat-Wachs, besteht.

11. Verwendung eines Ethylenpolymerisates in Form einer "Ethylenpolymerisat in Wasser"-Emulsion für die Herstellung der Strukturschicht der Verbundglasscheiben nach einem der Ansprüche 1 bis 10 mit der Maßgabe, daß die Emulsion so aufgebracht wird, daß Strukturschichten gebildet werden, die eine Dicke im Bereich von 5 bis 8 µm aufweisen.

12. Verwendung nach Anspruch 11 mit der Maßgabe, daß die Emulsion auf Glasscheibenkanten aufgebracht wird, die eine Schleifbehandlung mit einem Diamantwerkzeug der mittleren Schleifkorngröße von 76 bis 91 µm erfahren haben.

13. Verwendung nach einem der Ansprüche 11 oder 12 mit der Maßgabe, daß die Emulsion auf Glasscheibenflächen und/oder Glasscheibenkanten aufgebracht wird, die mit reaktiven organischen Verbindungen des Aluminiums, des Siliciums, des Vanadiums, des Titans oder des Zirkons oder Gemischen dieser Verbindungen vorbehandelt sind.

14. Verwendung nach Anspruch 13 mit der Maßgabe, daß die reaktiven organischen Verbindungen Amino-Verbindungen sind.

15. Verwendung nach einem der Ansprüche 11 bis 14, wobei das Ethylenpolymerisat die folgende Zusammensetzung aufweist:
30 bis 90 Gewichtsteile Ethylen,
0 bis 10 Gewichtsteile weiterer α -Olefine mit 2 bis 12 C-Atomen, welche auch Halogenatome tragen können,
3 bis 40 Gewichtsteile eines oder mehrerer Acryl- oder Methacrylsäureestern, bei denen der Esterrest aus C₁- bis C₂₀-Alkyl, C₅- bis C₁₈-Cycloalkyl oder C₇- bis C₁₈-Aralkyl besteht, wobei die genannten Esterreste auch Halogenatome tragen können,
7 bis 40 Gewichtsteile Acrylsäure und/oder Methacrylsäure und
0 bis 10 Gewichtsteile weiterer copolymerisierbarer Monomere,
und wobei dieses Ethylenpolymerisat in Wasser die disperse Phase bildet.
